# EUROPÄISCHE PATENTANMELDUNG

(11) **EP 0 672 715 A2**
(43) Veröffentlichungstag der Anmeldung: **20.09.1995**
(21) Anmeldenummer: 95103465.1
(22) Anmeldetag: 10.03.1995
(51) Int. Cl.: C08K 5/21, C08L 61/10, C08G 14/08, B27N 1/02, B27D 1/04, C08L 97/02, C09J 161/34

(54) **Hochreaktive wässerige Bindemittel auf Phenolharzbasis für Holzwerkstoffe**

(30) Priorität: 19.03.1994 DE 4409512
(71) Anmelder: BASF AKTIENGESELLSCHAFT, D-67056 Ludwigshafen (DE)
(72) Erfinder: Schatz, Hermann, D-67435 Neustadt (DE); Lehnert, Heinz, D-67227 Frankenthal (DE); Matthias, Günther, Dr., D-67227 Frankenthal (DE)

(57) **Zusammenfassung**

Herstellung von hochreaktiven wässerigen Bindemitteln für Holzwerkstoffe aus zerteiltem gewachsenen Holz durch Mischung von
A) 67 bis 95 Gew.-% einer wässerigen Lösung eines Kondensationsharzes, aufgebaut aus
   a1) 25 bis 35 mol-% Phenol,
   a2) 65 bis 75 mol-% Formaldehyd und
   a3) 0 bis 2 mol-% Phenolderivate
      mit einem Feststoffgehalt von 40 bis 55 Gew.-%, einer Viskosität von 0,5 bis 5 Pa·s (bezogen auf einen Feststoffgehalt von 48 Gew.-% und gemessen bei 20°C) und enthaltend 0,8 bis 1,5 Moläquivalente, bezogen auf das Phenol und die Phenolderivate, eines Alkalihydroxids
   und
B) 5 bis 33 Gew.-% Harnstoff in Form einer wässerigen Lösung oder als Feststoff,
indem man die Mischung der Komponenten A) und B) höchstens 96 h, bevor man das Bindemittel auf zerteiltes gewachsenes Holz aufträgt und es zu Holzwerkstoffen verleimt, vornimmt.

## Beschreibung

Die Erfindung betrifft ein verbessertes Verfahren zur Herstellung von wässerigen hochreaktiven Bindemitteln für Holzwerkstoffe aus zerteiltem gewachsenen Holz durch Mischung von
A) 67 bis 95 Gew.-% einer wässerigen Lösung eines Kondensationsharzes, aufgebaut aus
   a1) 25 bis 35 mol-% Phenol,
   a2) 65 bis 75 mol-% Formaldehyd und
   a3) 0 bis 2 mol-% Phenolderivate
      mit einem Feststoffgehalt von 40 bis 55 Gew.-%, einer Viskosität von 0,5 bis 5 Pa s (bezogen auf einen Feststoffgehalt von 48 Gew.-% und gemessen bei 20°C) und enthaltend 0,8 bis 1,5 Moläquivalente, bezogen auf das Phenol und die Phenolderivate, eines Alkalihydroxids
   und
B) 5 bis 33 Gew.-% Harnstoff in Form einer wässerigen Lösung oder als Feststoff.

Bindemittel auf Basis von wässerigen alkalischen Phenol-Formaldehyd-Harzen (Resolen), die für die Verleimung von zerteiltem gewachsenem Holz wie Holzfasern, Holzspänen, Holzfurnieren oder Holzleisten zu den entsprechenden Holzwerkstoffen wie Holzfaserplatten, Holzspanplatten, Sperrholz und Tischlerplatten geeignet sind, sind allgemein bekannt. Üblicherweise werden bei der Herstellung der Holzwerkstoffe die Bindemittel auf das zerteilte gewachsene Holz aufgetragen und bei erhöhten Temperaturen zusammengepreßt, bis das Bindemittel ausgehärtet ist.

Zur Erreichung einer hohen Wirtschaftlichkeit bei der Herstellung von Holzwerkstoffen werden Bindemittel gewünscht,
- die eine nicht zu hohe Viskosität aufweisen, da ansonsten beim Auftragen des Bindemittels auf zerteiltes gewachsenes Holz technische Schwierigkeiten auftreten und insbesondere im Fall von Holzspänen und Holzfasern das Bindemittel nicht gleichmäßig verteilt wird,
- die beim Verleimen des zerteilten gewachsenen Holzes möglichst rasch aushärten und
- mit denen sich Holzwerkstoffe mit einem allgemein hohen Eigenschaftsprofil herstellen lassen.

Besonders kurze Fertigungszeiten in den Heißpressen sind mit solchen Phenol-Formaldehyd-Harzen zu erreichen, die einen relativ hohen Gehalt des die Härtung beschleunigenden Alkalihydroxides und bereits einen hohen Kondensationsgrad aufweisen. Die Möglichkeit, den Kondensationsgrad zu erhöhen, wird jedoch dadurch begrenzt, daß sich mit steigendem Kondensationsgrad die Viskosität der Bindemittel erhöht, was zu technischen Schwierigkeiten beim Auftragen des Bindemittels auf das zerteilte gewachsene Holzes führt.

Aus der DE-A 2 944 178 ist bekannt, die Viskosität der Bindemittel auf Basis eines Phenol-Formaldehyd-Harzes mit hohem Kondensationsgrad zu reduzieren, indem man den Feststoffgehalt der Harze durch Verdünnung mit Wasser absenkt. Die Preßzeiten lassen sich durch diese Maßnahme jedoch kaum verkürzen, denn der Vorteil des hohen Kondensationsgrades wird hier durch den höheren Wassergehalt kompensiert.

Aus der EP-A 0 146 881 sind rasch aushärtende wässerige Bindemittel für Spanplatten auf Basis von einem Phenol-Formaldehyd-Harz mit einer Viskosität von mehr als 300 mPa·s (gemessen bei 20°C), einem Alkaligehalt von 2 bis 12 Gew.-%, einem hohen Kondensationsgrad sowie einem Feststoffgehalt von 20 bis 55 Gew.-% bekannt. Die Bindemittel werden erhalten, indem man Phenol und Formaldehyd in wässerig alkalischem Medium kondensiert und am Ende der Kondensationsreaktion 2 bis 30 Gew.-% Harnstoff, bezogen auf die wässerige Lösung des Phenol-Formaldehyd-Kondensationsharzes, zusetzt. Hinsichtlich des Zeitraumes zwischen der Herstellung des Bindemittels und seiner Weiterverarbeitung zu Spanplatten werden keine Angaben gemacht.

Die EP-A 0 282 903 beschreibt niedrigviskose wässerige Bindemittel für Spanplatten auf Basis von einem Phenol-Formaldehyd-Harz und Harnstoff mit einem Trockengehalt von 38 bis 65 Gew.-% und einem Gehalt an Dimethylol- und/oder Trimethylolharnstoff von 0 bis 5 Gew.-%, die bei ihrer Verarbeitung zu Spanplatten besonders schnell aushärten. Nach den dortigen Herstellvorschriften wird der wässerigen Lösung des Phenol-Formaldehyd-Kondensationsharzes unmittelbar nach seiner Herstellung Harnstoff zugesetzt und die Mischung anschließend mit Dimethylolharnstoff abgemischt. Es findet sich kein Hinweis darauf, nach Ablauf welcher Zeit nach ihrer Herstellung die Bindemittel zu Spanplatten weiterverarbeitet wurden.

In der EP-A 0 282 910 wird offenbart, daß ein Zusatz von 0,2 bis 3 Gew.-% an Sulfit und/oder Hydroxymethansulfinat zu den in der EP-A 0 282 903 beschriebenen Bindemitteln den Anstieg der Viskosität während der Lagerung der Harze verlangsamt.

Sofern die Harnstoff enthaltenden wässerigen Bindemittel auf Basis von Phenol-Formaldehyd-Harz, die einen für eine rasche Aushärtung erforderlichen Gehalt an Alkalihydroxid von mehr als 0,8 Moläquivalenten pro mol Phenol enthalten, nicht innerhalb kurzer Zeit nach ihrer Herstellung weiterverarbeitet werden, sind die anwendungstechnischen Eigenschaften der aus ihnen hergestellten Holzwerkstoffe jedoch noch verbesserungsbedürftig, insbesondere was ihre Beständigkeit gegenüber Feuchtigkeitseinflüssen betrifft.

Der Erfindung lag daher die Aufgabe zugrunde, ein Verfahren zur Herstellung von Bindemitteln bereitzustellen, mit denen sich Holzwerkstoffe, die ein hohes Eigenschaftsprofil und insbesondere eine gute Beständigkeit gegenüber Feuchtigkeitseinflüssen aufweisen, wirtschaftlich fertigen lassen.

Demgemäß wurde ein Verfahren zur Herstellung von Bindemitteln gefunden, welches dadurch gekennzeichnet ist, daß man die Mischung der Komponenten A) und B) höchstens 96 h, bevor man das Bindemittel auf zerteiltes gewachsenes Holz aufträgt und es zu Holzwerkstoffen verleimt, vornimmt.

Die für das erfindungsgemäße Verfahren benötigten definitionsgemäßen Lösungen der Kondensationsharze A), die im folgenden Text kurz als Resole A bezeichnet werden, können auf allgemein bekannte Weise kontinuierlich oder diskontinuierlich hergestellt werden (vgl. Ullmanns Encyklopädie der technischen Chemie, 3. Auflage, Verlag Urban & Schwarzenberg, München-Berlin 1962, 13. Band, Seiten 456-461). Die kontinuierliche Herstellung der Lösungen der Resole A wird besonders günstig in einer aus mehreren Einzelreaktoren bestehenden, kontinuierlich durchflossenen Reaktionsanlage vorgenommen, die in der DE-A 1 720 306 beschrieben ist.

Die Resole A sind
a1) zu 25 bis 35, bevorzugt zu 26 bis 33 mol-% aus Phenol
a2) zu 65 bis 75, bevorzugt zu 66 bis 74 mol-% aus Formaldehyd und
a3) zu 0 bis 2 mol-% aus Phenolderivaten
aufgebaut.

Als Phenolderivate a3) kommen insbesondere solche in Betracht, durch deren Mitverwendung das Eigenschaftsbild der Kondensationsharze im Vergleich zu solchen, die nur aus Phenol aufgebaut sind, nicht wesentlich verändert wird. Geeignete Phenolderivate a3) sind beispielsweise Homologe des Phenols, z. B. (C₁- bis C₆)-Alkylphenole wie das preisgünstige m, o, und p-Kresol, die Xylenole sowie das Resorcin.

Weiterhin enthalten die Lösungen der Resole A 0,8 bis 1,5, bevorzugt 1,0 bis 1,3 Moläquivalente, bezogen auf das Phenol und die Phenolderivate, an Alkalihydroxid, vor allem Natrium- oder Kaliumhydroxid.

Das gesamte Alkalihydroxid kann bereits der Mischung der Ausgangsprodukte a1) bis a3), bevorzugt in Form einer 40 bis 60 gew.-%igen wässerigen Lösung, zugesetzt werden. Es empfiehlt sich jedoch, der Mischung der Ausgangsprodukte lediglich 20 bis 30 % der Gesamtmenge an Alkalihydroxid vor Beginn der Kondensationsreaktion zuzusetzen, 30 bis 40 Gew.-% während der Kondensationsreaktion und den restlichen Anteil, nachdem der gewünschte Kondensationsgrad erreicht ist.

Der Feststoffgehalt der Lösungen der Resole A beträgt 40 bis 55, bevorzugt 45 bis 51 Gew.-% und ihre Viskosität 0,5 bis 5, bevorzugt 0,75 bis 1,5 Pa·s.

Die Angaben zum Feststoffgehalt beziehen sich auf die Methode zur Messung des Feststoffgehaltes, nach der 1 g der Substanz in einem Wägeglas nach DIN 12 605 mit einem Durchmesser von 35 mm bei einer Temperatur von 120°C 2 h getrocknet werden.

Die definitionsgemäßen Viskositäten beziehen sich auf Messungen nach DIN 53 019. Die Viskosität wird hiernach an einer auf einen Feststoffgehalt von 48 Gew.-% eingestellten Lösung des Resols A in einem Rotationsviskosimeter bei 20°C und einem Schergefälle von 41 s⁻¹, gemessen, wobei die Probe zuvor 20 sec bei einem Schergefälle von 41 s⁻¹ geschert wurde.

Erfindungsgemäß wird das wässerige Bindemittel durch Mischung von 67 bis 95, bevorzugt 75 bis 90 Gew.-% einer Lösung des Resols A und 5 bis 33, bevorzugt 10 bis 25 Gew.-% Harnstoff in Form einer wässerigen Lösung oder als Feststoff bevorzugt bei einer Temperatur von 15 bis 40°C hergestellt. Der Feststoffgehalt der verwendeten Harnstofflösungen ist möglichst hoch und beträgt günstigerweise 60 bis 70 Gew.-%.

Die wässerigen Bindemittel weisen einen Feststoffgehalt von 40 bis 65, bevorzugt von 48 bis 58 Gew.-% auf.

Für die Weiterverarbeitung zu Holzwerkstoffen werden Bindemittel mit einer Viskosität von 0,05 bis 1,5, insbesondere von 0,1 bis 1,0 und vor allem von 0,2 bis 0,5 Pa·s bevorzugt. Besonders einfach läßt sich die gewünschte Viskosität des Bindemittels einstellen, indem die Viskosität eines Resols A durch Zugabe von festem Harnstoff oder einer wässerigen Harnstofflösung gezielt abgesenkt wird.

Weiterhin kann das wässerige Bindemittel gegebenenfalls Sulfit und/oder Hydroxymethansulfinat in einer Konzentration von 0,2 bis 3 Gew.-%, berechnet als SO₃²⁻ oder Sulfinsäurerest, enthalten. Diese Anionen werden dem Bindemittel bevorzugt als Alkalisalze, insbesondere als Natriumsalze, in fester oder gelöster Form zugesetzt.

Außerdem kann dem Bindemittel zur Beschleunigung der Härtungsreaktion zusätzlich Kaliumcarbonat in Mengen von 2 bis 8, bevorzugt 4 bis 6 Gew.-%, bezogen auf das Bindemittel, zugefügt werden.

Daneben kann das Bindemittel Schädlingsbekämpfungsmittel, z.B. handelsübliche Insektizide oder Fungizide, enthalten. Bevorzugt wird das Bindemittel oder eine seiner Komponenten unmittelbar vor der Herstellung des Bindemittels mit dem Schädlingsbekämpfungsmittel vermischt.

Die Wasserfestigkeit von Holzwerkstoffen wie Spanplatten oder Faserplatten kann erhöht werden, indem dem Bindemittel eine handelsübliche wäßrige Paraffindispersion zugesetzt wird.

Die Weiterverarbeitung der wässerigen Bindemittel zu Holzwerkstoffen erfolgt höchstens 96 h, bevorzugt 72 h und besonders bevorzugt 48 h, nachdem die wässerige Lösung des Resols A und der Harnstoff vermischt wurde, indem man das Bindemittel auf zerteiltes gewachsenes Holz aufträgt und es verleimt. Die Verleimung erfolgt günstigerweise, indem man das mit dem Bindemittel versehene zerteilte gewachsene Holz bei Temperaturen von 100 bis 250°C, bevorzugt bei 105 bis 225°C zusammenpreßt. Unter diesen Bedingungen härtet das Bindemittel rasch aus und man erhält Holzwerkstoffe mit einem hohen Eigenschaftsprofil.

Das erfindungsgemäße Bindemittel eignet sich besonders zur Herstellung von Holzwerkstoffen wie Sperrholz oder Tischlerplatten und vor allem von Holzfaserplatten und Holzspanplatten (vgl. Ullmanns Encyklopädie der Technischen Chemie, 4. Auflage, 1976, Band 12, S. 709 bis 727), die durch Verleimung von zerteiltem gewachsenem Holz wie Holzfasern, Holzspänen, Holzfurnieren oder Holzleisten mit dem Bindemittel erhalten werden.

Die Herstellung von Spanplatten, deren Herstellung allgemein bekannt und beispielsweise in H.-J. Deppe, K. Ernst, Taschenbuch der Spanplattentechnik, 2. Auflage, Verlag Leinfelden 1982, beschrieben ist, kann beispielsweise auf folgende Weise vorgenommen werden:

Es werden bevorzugt Späne eingesetzt, deren mittlere Spandicke im allgemeinen bei 0,2 bis 0,5 mm liegt und die bis 6 Gew.-% Wasser enthalten.

Das Bindemittel wird möglichst gleichmäßig auf die Holzspäne aufgetragen, wobei das Verhältnis Holzbindemittel : Holzspäne, bezogen auf den Feststoff- bzw. Trockengehalt, 0,05 : 1 bis 0,3 : 1 beträgt. Eine gleichmäßige Verteilung läßt sich beispielsweise erreichen, indem man das Bindemittel in feinverteilter Form auf die Holzspäne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von 100 bis 250°C, bevorzugt von 140 bis 225°C, durch Anwendung von Drücken von üblicherweise 20 bis 30 bar zu einer maßhaltigen Platte verpreßt. Die benötigten Preßzeiten können in einem weiten Bereich variieren und liegen im allgemeinen zwischen 2 bis 30 Minuten. Sofern der Wassergehalt und der Feststoffgehalt der Bindemittel in den Vorzugsbereichen liegt, reichen bei einer Temperatur von 140 bis 225°C spezifische Preßzeiten von 6 bis 45 sec pro mm Schichtdicke aus.

Die gegebenenfalls erforderliche Endbearbeitung der Holzspanplatten wie z.B. das genaue Zuschneiden oder das Schleifen der Platten kann zu einem beliebigen Zeitpunkt nach dem Verleimen erfolgen.

Zur Herstellung von mitteldichten Holzfaserplatten aus den erfindungsgemäßen Bindemitteln eignen sich vor allem folgende Verfahren:

Holzfasern geeigneter Qualität sind erhältlich, indem man rindenfreie Holzschnitzel in Spezialmühlen oder sog. Refinern bei Temperaturen von ca. 180°C zwischen Mahlscheiben zerreibt.

Anschließend werden die Holzfasern beleimt, indem man die Fasern mit einem Luftstrom aufwirbelt und in den so erzeugten Fasernstrom das Bindemittel eindüst (sog. "Blow-Line"-Verfahren). Das Verhältnis Holzfasern zu Bindemittel, bezogen auf den Trockengehalt bzw. auf den Feststoffgehalt, beträgt üblicherweise 8,5:1 bis 4,5:1.

Die beleimten Fasern werden in dem Faserstrom bei Temperaturen von 130°C bis 180°C getrocknet, zu einem Faservlies ausgestreut und bei Drücken von 20 bis 40 bar zu Platten verpreßt.

Sperrholzplatten sind gewöhnlich aus 3 bis 7 Furnierhölzern aufgebaut, bei denen die Furnierhölzer so zusammengefügt sind, daß die Holzfasern der jeweils übereinander angeordneten Furnierhölzer einen Winkel von 45° bis 90° bilden.

Sie werden im allgemeinen hergestellt, indem man das Bindemittel gleichmäßig mit Hilfe von Walzen oder Breitschlitzdüsen auf Furnierhölzer aufträgt, die beschichteten Furnierhölzer aufeinanderlegt und bei Temperaturen von 105 bis 140°C und Drücken von 2 bis 40 bar verleimt. Die Anwendung höherer Drücke von etwa 40 bis 80 bar führt zu einer weiteren Verdichtung des Holzes und man erhält Preßsperrholz.

Eine modifizierte Art von Sperrholzplatten stellen die Tischlerplatten dar, bei denen sich zwischen 2 Sperrholzschichten eine Mittelschicht aus miteinander verleimten Holzleisten befindet. Man fertigt die Tischlerplatten, indem man aus Holzleisten eine Platte zusammenleimt und auf diese anschließend die Furnierhölzer leimt.

Die nach dem erfindungsgemäßen Verfahren hergestellten Holzwerkstoffe weisen eine hohe Beständigkeit gegenüber Feuchtigkeitseinflüssen und insbesondere eine geringe Dickenquellung bei Lagerung in Wasser auf.

### Beispiele

### Herstellung des Resols A

Das Resol A wurde in einer aus 4 Einzelreaktoren bestehenden kontinuierlich durchflossenen Reaktorkaskade, wie sie in der DE-A 17 20 306 beschrieben ist, hergestellt. Der 1. Reaktor wurde kontinuierlich mit 369 kg/h (3,93 kmol/h) Phenol, 840 kg/h (11,2 kmol/h) einer 40 gew.-%igen wässerigen Formaldehydlösung, 60 kg/h Wasser und 106 kg/h (1,33 kmol/h) 50 gew.-%iger Natronlauge befüllt. Nach einer mittleren Verweilzeit im 1. Reaktor von 11 Minuten bei einer Temperatur 100°C wurde die Reaktionsmischung kontinuierlich in einen 2. Reaktor geleitet. In diesem Reaktor wurde die Kondensation bei einer mittleren Verweilzeit von 26 Minuten bei 60°C weitergeführt. Im 3. Reaktor wurde die Reaktionsmischung mit weiteren 136 kg/h (1,70 kmol/h) 50 gew.-%iger Natronlauge versetzt. Die mittlere Verweilzeit im 3. Reaktor betrug 75 Minuten und die Temperatur 85°C. Im 4. Reaktor verblieb die Reaktionsmischung im Mittel 110 Minuten bei einer Temperatur von ca. 75°C. Das aus dem 4. Reaktor kontinuierlich entnommenen Reaktionsprodukt wurde mit 166 kg/h (2,08 kmol/h) 50 gew.-%iger Natronlauge versetzt und auf 20°C abgekühlt.

Die so hergestellte Lösung des Resols A hatte eine Viskosität von 1,01 Pa·s, einen Feststoffgehalt von 49,1 %, einen durch Titration ermittelten NaOH-Gehalt von 10,8 Gew.-% , was 1,15 Moläquivalenten NaOH, bezogen auf das Phenol, entspricht, und eine Dichte von 1,26 g/cm³ (ermittelt nach DIN 51 757).

### Herstellung einer Spanplatte - erfindungsgemäßes Verfahren

In 100 Teilen der nach seiner Herstellung 14 Tage gelagerten Lösung des Resols A wurden bei einer Temperatur von 30°C 33 Teile fester Harnstoff gelöst. Unmittelbar danach wurde dieses Bindemittel mit 8 Gew.-%, bezogen auf das Bindemittel, einer wäßrigen 50 gew.-%igen Paraffindispersion und 5 Gew.-%, bezogen auf das Bindemittel, einer 50 gew.-%igen Kaliumcarbonat-Lösung vermischt und zur Herstellung von Spanplatten eingesetzt.

Die aus dieser Mischung auf übliche Weise mit einer spezifischen Preßzeit von 9,5 s pro mm Plattendicke hergestellten Spanplatten wiesen eine Dickenquellung von 11,4 % auf.

### Herstellung einer Spanplatte - Vergleichsversuch

Unmittelbar nach seiner Herstellung wurden in 100 Teilen der Lösung des Resols A bei einer Temperatur von 30°C 33 Teile fester Harnstoff gelöst und das so hergestellte Bindemittel 14 Tage bei einer Temperatur von 20°C gelagert.

Danach wurde das Bindemittel mit 8 Gew.-%, bezogen auf das Bindemittel, einer wäßrigen 50 gew.-%igen Paraffindispersion und 5 Gew.-%, bezogen auf das Bindemittel, einer 50 gew.-%igen Kaliumcarbonat-Lösung vermischt und unmittelbar danach zur Herstellung von Spanplatten eingesetzt.

Die aus dieser Mischung auf übliche Weise mit einer spezifischen Preßzeit von 9,5 s pro mm Plattendicke hergestellten Spanplatten wiesen eine Dickenquellung von 17,7 % auf.

Die Dickenquellung wurde nach DIN 52 364 ermittelt, wobei die Prüfkörper 24 h bei 20°C in Wasser gelagert wurden.

Die Dickenquellung ist die Zunahme der Dicke durch Feuchtigkeitsaufnahme der Probe, bezogen auf Ausgangsdicke und wird in Prozent angegeben.

## Patentansprüche

1. Verfahren zur Herstellung von hochreaktiven wässerigen Bindemitteln für Holzwerkstoffe aus zerteiltem gewachsenen Holz durch Mischung von
A) 67 bis 95 Gew.-% einer wässerigen Lösung eines Kondensationsharzes, aufgebaut aus
a1) 25 bis 35 mol-% Phenol,
a2) 65 bis 75 mol-% Formaldehyd und
a3) 0 bis 2 mol-% Phenolderivate
mit einem Feststoffgehalt von 40 bis 55 Gew.-%, einer Viskosität von 0,5 bis 5 Pa·s (bezogen auf einen Feststoffgehalt von 48 Gew.-% und gemessen bei 20°C) und enthaltend 0,8 bis 1,5 Moläquivalente, bezogen auf das Phenol und die Phenolderivate, eines Alkalihydroxids
und
B) 5 bis 33 Gew.-% Harnstoff in Form einer wässerigen Lösung oder als Feststoff,
dadurch gekennzeichnet, daß man die Mischung der Komponenten A) und B) höchstens 96 h, bevor man das Bindemittel auf zerteiltes gewachsenes Holz aufträgt und es zu Holzwerkstoffen verleimt, vornimmt.

2. Verfahren nach Anspruch 1, dadurch gekennzeichnet, daß man als Phenolderivate a3) Resorcin, Xylenole und/oder Kresole einsetzt.

3. Verfahren nach Anspruch 1 oder 2, dadurch gekennzeichnet, daß man eine Lösung eines Kondensationsharzes einsetzt, die 1,2 bis 1,4 Moläquivalente, bezogen auf das Phenol und die Phenolderivate, an Alkalihydroxid enthält.

4. Verfahren nach den Ansprüchen 1 bis 3, dadurch gekennzeichnet, daß man ein Kondensationsharz einsetzt, das als Alkalihydroxid Natrium- oder Kaliumhydroxid enthält.

5. Verfahren nach den Ansprüchen 1 bis 4, dadurch gekennzeichnet, daß man dem Bindemittel zusätzlich 2 bis 8 Gew.-% Kaliumcarbonat zusetzt.

6. Holzwerkstoffe, hergestellt unter Verwendung eines Bindemittels gemäß den Ansprüchen 1 bis 5.
